# EUROPÄISCHE PATENTSCHRIFT

(11) **EP 4 339 375 B1**
(45) Veröffentlichungstag und Bekanntmachung des Hinweises auf die Patenterteilung: **11.12.2024**
(21) Anmeldenummer: 22196360.6
(22) Anmeldetag: 19.09.2022
(51) Int. Cl.: E02B 8/08, A01K 79/00

(54) **VORRICHTUNG ZUR WANDERUNG VON WASSERTIEREN**
DEVICE FOR MIGRATING AQUATIC ANIMALS
DISPOSITIF POUR LA MIGRATION D'ANIMAUX AQUATIQUES

(43) Veröffentlichungstag der Anmeldung: 20.03.2024
(73) Patentinhaber: Flusslauf Ingenieurbüro für Gewässerökologie und Wasserbau e.U., 8010 Graz (AT)
(72) Erfinder: Seidl, Georg, 8010 Graz (AT)
(74) Vertreter: Schwarz & Partner Patentanwälte GmbH

(56) Entgegenhaltungen:
- EP-A1- 3 214 225
- DE-A1- 102018 251 767
- MALLEN-COOPER M ET AL: "Optimising Denil fishways for passage of small and large fishes", FISHERIES MANAGEMENT AND ECOLOGY, JOHN WILEY & SONS, INC, HOBOKEN, USA, vol. 14, no. 1, 5 January 2007 (2007-01-05), pages 61 - 71, XP071918074, ISSN: 0969-997X, DOI: 10.1111/J.1365-2400.2006.00524.X

## Beschreibung

Die Erfindung betrifft eine Vorrichtung zur Wanderung von Wassertieren, gemäß dem Oberbegriff des Anspruchs 1. Diese Vorrichtung ist dazu ausgebildet, an einem durch eine Barriere in ein Unterwasser und ein Oberwasser getrenntes Gewässer angeordnet zu werden und die Wanderung der Wassertiere zwischen dem Unterwasser und dem Oberwasser des Gewässers zu ermöglichen. Insbesondere betrifft die Erfindung Weiterentwicklungen des bekannten Denil-Fischpasses.

Der Denil-Fischpass ist eine technische Fischwanderhilfe mit langer Tradition. Bereits Anfang des 20. Jahrhunderts wurde die Urform des Denil-Fischpasses errichtet und erzielte hinsichtlich der Lachswanderung gute Ergebnisse. Das Funktionsprinzip des Denil-Fischpasses beruht darauf, dass in einen üblicherweise stark geneigten Gerinnekörper eingebrachte Lamellen Turbulenzen erzeugen, die in weiterer Folge einen Rückstaueffekt des Fließwassers bewirken, wodurch die Fließgeschwindigkeiten im Wanderkorridor, insbesondere in der Mitte des Stromstriches, entsprechend verlangsamt werden. Durch diesen Effekt ist die Aufwanderung von Fischen bei deutlich höherem Gefälle und deutlich geringerem Platzbedarf möglich. Dieser Aspekt liefert einen eklatanten flächen- und kostenmäßigen Vorteil gegenüber anderen verbreiteten Fischpasssystemen, wie beispielsweise Schlitzpass, Beckenpass und Umgehungsgerinne.

Das Dokument US 1 621 170 offenbart einen Beckenpass, auch "Fischtreppe" genannt, der zum Aufwandern von Fischen, beispielsweise über ein Querbauwerk in einem Fluss, dient. Bei dieser Vorrichtung sind jedoch großflächige bauliche Maßnahmen notwendig. Beispielsweise müssen die Beckenkaskaden aufwändig neben dem Fluss ins Erdreich gegraben und/oder betoniert werden. Diese Baumaßnahmen bringen sowohl ökologische als auch ökonomische Nachteile mit sich.

Während also bei einem Schlitzpass, einem Beckenpass oder einem Umgehungsgerinne die Gesamthöhe durch die Aneinanderreihung von einzelnen Becken abschnittsweise überbrückt wird, erfolgt beim Denil-Fischpass der Höhenabbau kontinuierlich.

Die bekannten Ausbildungen des Denil-Fischpasses zeigen üblicherweise eine schlechte Passierbarkeit für Kleinfischarten und Jungfischstadien. Das liegt einerseits an der hohen Turbulenz im Fischpass, für deren Überwindung diesen Wassertieren die Kräfte fehlen.

Andererseits haben Kleinfischarten, Jungfischstadien und etliche Arten anderer Wassertiere, auch zahlreiche große Cypriniden, einen starken Sohlbezug, was zu einer potenziellen Verminderung der Effizienz der konventionellen Denil-Fischpässe führt.

Das Dokument EP 3 214 225 A1 offenbart eine Weiterentwicklung des Denil-Fischpasses, bei dem plattenförmige Lamellen mit Ausschnitten versehen sind, die sich zunächst mit geraden Seitenkanten nach unten verjüngen und dann in einen Abschnitt mit geraden, parallelen Seitenkanten übergehen. Diese Anordnung reduziert mittels der sohlnahen Querverbindungen der Lamellen die Fließgeschwindigkeit am Boden deutlich. Allerdings entstehen durch diese Ausbildung der Lamellen Turbulenzen, welche einen starken, nach oben gerichteten Strömungsimpuls zur Folge haben. Bei Beprobungen von derartigen weiterentwickelten Denil-Fischpässen wurde deutlich, dass Kleinfischarten und sohlorientierte Wanderer unterrepräsentiert sind. Dies hängt nach Einschätzung des Erfinders vor allem mit den hohen, nach oben gerichteten Fließgeschwindigkeiten und der hohen turbulenten kinetischen Energie zusammen. So übertreffen bei den bisherigen bekannten Ausführungen von Denil-Fischpässen die Fließgeschwindigkeiten nach oben in Richtung einer Normalen auf die Längsachse des Gerinnekörpers jene entlang der Längsachse des Gerinnekörpers. Hierdurch verlieren die Kleinfische während der Passage des Fischpasses die Orientierung oder triften in den Turbulenzen ab, wodurch ihre Aufwanderung gehemmt wird.

Aus dem Dokument AT 520908 A1 oder dem Familienmitglied DE 10 2018 251767 A1 ist eine andere Weiterentwicklung des Denil-Fischpasses bekannt, die darauf abzielt, den Denil-Fischpass auch für Kleinfischarten, Jungfischstadien und generell für Wassertiere mit starkem Sohlbezug überwindbar zu machen. Bei dieser Ausführungsform ist die Sohle des Gerinnekörpers zumindest abschnittsweise entlang der Längsachse des Gerinnekörpers mit einer Deckschicht aus natürlichem Sohlsubstrat und/oder Bruchmaterial versehen und weist einen entlang der Längsachse verlaufenden Steg mit konstanter Höhe auf. Die quer zur Längsachse angeordneten Lamellen sind zweiteilig aus einer rechten Teillamelle und einer linken Teillamelle ausgebildet, die jeweils seitlich an dem Steg anliegen. Neben den biologischen Vorteilen dieser Fischaufstiegshilfe musste aber auch festgestellt werden, dass sie, um ein stabiles Fließgeschwindigkeitsprofil zu etablieren, deutlich höhere Dotationswassermengen als der ursprüngliche Denil-Fischpass benötigt.

Es besteht daher weiterhin ein Bedarf nach einer verbesserten Aufstiegshilfe für Wassertiere mit einigen oder allen der folgenden Eigenschaften:
- Stabilisierung des Strömungsprofils der Wassertier-Aufstiegshilfe,
- Verringerung der Fließgeschwindigkeiten in der Wassertier-Aufstiegshilfe,
- Verringerung der Turbulenzen in der Wassertier-Aufstiegshilfe,
- Verringerung des erforderlichen Wasserdurchflusses durch die Wassertier-Aufstiegshilfe hindurch,
- Ausbildung von erweiterten Ruhezonen für Kleinfische in der Wassertier-Aufstiegshilfe.

Die vorliegende Erfindung löst die gestellte Aufgabe durch Bereitstellung einer Vorrichtung zur Wanderung von Wassertieren mit den Merkmalen des Anspruchs 1. Vorteilhafte Ausführungsformen der Erfindung sind in den Unteransprüchen, der Beschreibung und den Zeichnungen offenbart.

Die erfindungsgemäße Vorrichtung zur Wanderung von Wassertieren umfasst zumindest einen Gerinnekörper mit einem oberwasserseitigen Ende und mit einem unterwasserseitigen Ende, wobei der Gerinnekörper eine zwischen dem oberwasserseitigen Ende und dem unterwasserseitigen Ende verlaufende Längsachse aufweist, wobei die Sohle des Gerinnekörpers zumindest abschnittsweise entlang der Längsachse des Gerinnekörpers mit einer Deckschicht aus natürlichem Sohlsubstrat und/oder Bruchmaterial versehen ist, wobei die Deckschicht einen im Wesentlichen entlang der Längsachse verlaufenden Steg aufweist, und wobei im Gerinnekörper plattenförmige Lamellen quer zur Längsachse des Gerinnekörpers angeordnet sind. Die Lamellen weisen einen nach unten offenen unteren Ausschnitt auf, der oben durch ein Querelement begrenzt wird. Die Querschnittsfläche des unteren Ausschnitts ist so dimensioniert, dass der Steg der Deckschicht im unteren Ausschnitt aufnehmbar ist. Die Oberkante des Querelements weist eine zur Mitte hin abfallende Kontur auf, die eine untere Begrenzung eines sich vom Querelement nach oben erstreckenden oberen Ausschnitts der Lamellen definiert.

Die zur Mitte hin abfallende Kontur der Oberkante des Querelements führt dazu, dass sich der unten vom Querelement begrenzte obere Ausschnitt der Lamelle nach unten verjüngt. Die Begriffe "oben" und "unten" beziehen sich dabei auf die Einbaulage der Lamellen in der Vorrichtung zur Wanderung von Wassertieren. Der Begriff "zur Mitte hin" bezieht sich auf die Breitenrichtung der Lamelle.

Ein gleichmäßiger Strömungsverlauf des Wassers im Gerinnekörper und verringerte, symmetrische Turbulenzen ergeben sich, wenn die Kontur der Oberkante des Querelements symmetrisch in Bezug auf eine Breitenhalbierende der Lamelle ist.

Bevorzugt weist die Oberkante des Querelements eine zumindest abschnittsweise geschwungene Kontur auf. Die geschwungene Kontur sorgt für eine weitere Verringerung der Turbulenzen. Dieser positive Effekt wird verstärkt, wenn die geschwungene Kontur der Oberkante des Querelements ausschließlich aus geschwungenen Abschnitten besteht, d.h. keine geraden Abschnitte aufweist.

Aufgrund der einfacheren Herstellbarkeit der Lamellen kann es für alternative Ausführungsformen der Lamelle zweckmäßig sein, die Kontur mit geraden Abschnitten auszubilden und dabei einen etwas ungünstigeren Strömungsverlauf des Wassers im Gerinnekörper und weniger verringerte Turbulenzen in Kauf zu nehmen. Diese Ausführungsform wird man vor allem dann in Betracht ziehen, wenn die Vorrichtung zur Wanderung von Wassertieren nur ein geringes Gefälle aufweist oder nur geringe Höhenunterschiede zwischen Oberwasser und Unterwasser zu überwinden sind.

Besonders gute Ergebnisse in Bezug auf die oben geforderten Eigenschaften der Vorrichtung zur Wanderung von Wassertieren erzielt man, wenn ein zentraler Abschnitt der geschwungenen Kontur der Oberkante des Querelements konvex ausgebildet ist. Der Begriff "konvex" ist dabei im mathematischen Sinn zu verstehen, d.h. dass der Verlauf der Kontur unterhalb jeder Verbindungsstrecke zweier ihrer Punkte liegt.

Die besten hydraulischen Ergebnisse erzielt man, wenn der konvexe zentrale Abschnitt parabelförmig mit dem Parabel-Scheitelpunkt als tiefstem Punkt ausgebildet ist.

Zur weiteren Verbesserung der oben definierten Eigenschaften der erfindungsgemäßen Vorrichtung zur Wanderung von Wassertieren ist in einer Ausführungsform vorgesehen, dass sich an den konvexen zentralen Abschnitt beidseits konkave Seitenabschnitte anschließen, wobei bevorzugt die konkaven Seitenabschnitte die Endabschnitte der geschwungenen Kontur der Oberkante des Querelements bilden. Konkave Endabschnitte sind aber auch dann zweckmäßig, wenn sie sich an gerade Abschnitte der Kontur der Oberkante des Querelements anschließen. Der Begriff "konkav" ist dabei im mathematischen Sinn zu verstehen, d.h. dass der Verlauf der Kontur oberhalb jeder Verbindungsstrecke zweier ihrer Punkte liegt.

Wenn das Querelement als eigenständiges, vorzugsweise austauschbares Bauteil ausgebildet ist, können mit solchen Querelementen konventionelle Denil-Fischpässe erfindungsgemäß nachgerüstet werden und können die Lamellen erfindungsgemäßer Vorrichtungen zur Wanderung von Wassertieren rasch repariert werden oder an einen geänderten Wasserdurchfluss angepasst werden.

Für gute Passierbarkeit der Vorrichtung zur Wanderung von Wassertieren für Kleinfische und bodenorientierte Fischarten ist es zweckmäßig, dass die Höhe des Stegs der Deckschicht entlang der Längsachse des Gerinnekörpers im Wesentlichen konstant ist.

Die Erfindung wird nun anhand von beispielhaften Ausführungsformen unter Bezugnahme auf die Zeichnungen näher erläutert.
Fig. 1 zeigt in einer Schrägansicht von oben eine erste beispielhafte Ausführungsform einer erfindungsgemäßen Vorrichtung zur Wanderung von Wassertieren.
Fig. 2 zeigt in einem Längsschnitt entlang der Längsachse die erfindungsgemäße Vorrichtung aus Fig. 1.
Fig. 3 zeigt in Vorderansicht eine Lamelle gemäß der erfindungsgemäßen Vorrichtung zur Wanderung von Wassertieren.
Fig. 4 zeigt in Vorderansicht eine Lamelle, die üblicherweise im ursprünglichen Denil-Fischpass gemäß dem Stand der Technik verwendet wird.
Fig. 5 zeigt in Vorderansicht eine Lamelle des modifizierten Denil-Fischpasses gemäß dem Stand der Technik.
Fig. 6A zeigt einen Contourplot der Fließgeschwindigkeitsverteilung an den Lamellen des originalen Denil-Fischpasses.
Fig. 6B zeigt einen Contourplot der Fließgeschwindigkeitsverteilung an den Lamellen des modifizierten Denil-Fischpasses gemäß AT 520908.
Fig. 6C zeigt einen Contourplot der Fließgeschwindigkeitsverteilung an den Lamellen der erfindungsgemäßen Vorrichtung zur Wanderung von Wassertieren.
Fig. 7A zeigt einen Contourplot der turbulenten kinetischen Energie an den Lamellen des originalen Denil-Fischpasses.
Fig. 7B zeigt einen Contourplot der turbulenten kinetischen Energie an den Lamellen des modifizierten Denil-Fischpasses gemäß AT 520908.
Fig. 7C zeigt einen Contourplot der turbulenten kinetischen Energie an den Lamellen der erfindungsgemäßen Vorrichtung zur Wanderung von Wassertieren.

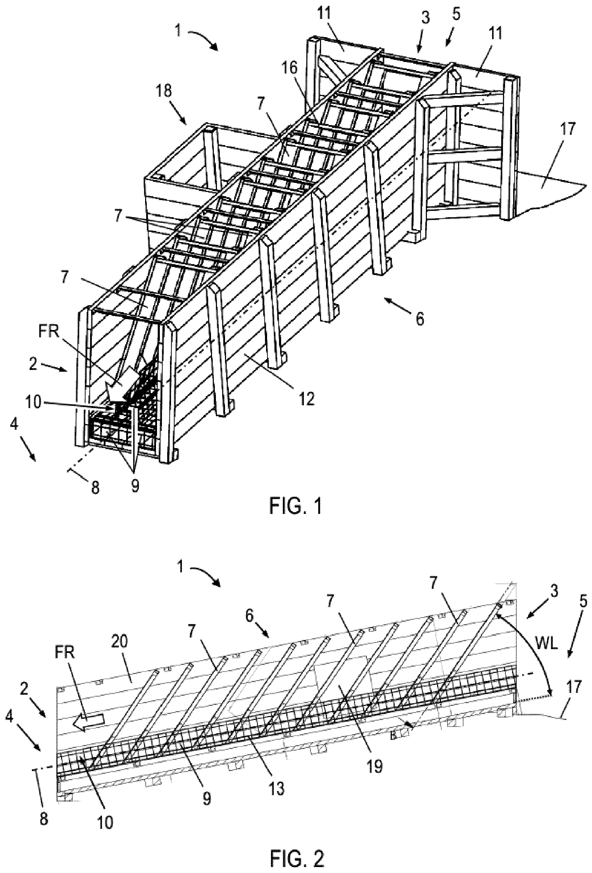

Die Figuren 1 und 2 zeigen in schematischer Darstellung eine Ausführungsform einer erfindungsgemäßen Vorrichtung 1 zur Wanderung von Wassertieren. Mittels dieser Vorrichtung 1 können Wassertiere eine Barriere in einem Gewässer überwinden und von einem Unterwasser 4 in ein Oberwasser 5 des Gewässers, oder umgekehrt, wandern. Handelt es sich bei dem Gewässer um ein fließendes Gewässer, beispielsweise einen Fluss oder einen Bach, so ist die Vorrichtung 1 im Wesentlichen entlang einer Flussrichtung FR angeordnet.

Die Vorrichtung 1 umfasst einen Gerinnekörper 6 mit einem oberwasserseitigen Ende 3, das mit dem Oberwasser 5 kommuniziert, und mit einem unterwasserseitigen Ende 2, das mit dem Unterwasser 4 kommuniziert. Der Gerinnekörper 6 erstreckt sich entlang einer Längsachse 8. Folglich fließt das Wasser vom Oberwasser 5 im Wesentlichen entlang der Flussrichtung FR beziehungsweise entlang der Längsachse 8 ins Unterwasser 4. Die Vorrichtung 1 kann im Bereich des oberwasserseitigen Endes 3 Stirnwände 11 aufweisen.

Weiters kann die Vorrichtung 1 stromaufwärts des oberwasserseitigen Endes 3 eine Gummischürze 17 im Bereich der Sohle aufweisen, um einer Unterspülung entgegenzuwirken. Die Gummischürze 17 kann mit Sohlsubstrat und/ oder Bruchmaterial belegt werden.

Die Vorrichtung 1 kann weiters einen Lichtschacht 18 aufweisen, wobei der Lichtschacht 18 seitlich des Gerinnekörpers 6 angeordnet ist und wobei innerhalb des Lichtschachts 18 ein Sichtfenster 19 in einer Seitenwand 12 des Gerinnekörpers 6 ausgebildet sein kann.

Im Gerinnekörper 6 sind in im Wesentlichen gleichen Abständen quer zur Längsachse 8 plattenförmige Lamellen 7 angeordnet. Diese Lamellen 7 bewirken einen Rückstaueffekt des Fließwassers, welcher die Strömungsgeschwindigkeit entsprechend verlangsamt. Die Lamellen 7 sind schräg stehend in Richtung des oberwasserseitigen Endes 3 des Gerinnekörpers 6 eingebracht. Der Winkel WL, der die Schrägstellung der Lamellen 7 definiert, beträgt beispielsweise 45 Winkelgrad. In manchen Ausführungsformen können die Lamellen 7 auch senkrecht angeordnet werden.

Die Sohle des Gerinnekörpers 6 ist entlang der Längsachse 8 zumindest abschnittsweise, bevorzugt jedoch über die gesamte Länge des Gerinnekörpers 6, mit einer Deckschicht 9 aus natürlichem Sohlsubstrat oder Bruchmaterial oder einem Gemisch aus natürlichem Sohlsubstrat und Bruchmaterial versehen. Zusätzlich kann Kantkorn in die Deckschicht 9 eingebracht werden. Kantkorn ist ein verschleißfester, gebrochener Schotter und kann die sohlnahe Fließgeschwindigkeit des Gewässers weiter herabsenken.

Die Deckschicht 9 weist einen im Wesentlichen entlang der Längsachse 8 verlaufenden Steg 10 auf. Unterhalb des Stegs 10 kann die Deckschicht 9 über die gesamte Breite der Sohle des Gerinnekörpers 6 eingebracht sein, wobei die Breite als quer zur Längsachse 8 des Gerinnekörpers 6 verlaufend definiert ist. Der Steg 10 der Deckschicht 9 verläuft vorzugsweise mittig in Bezug auf ihre Breite. Die Querschnittsgestalt der Deckschicht 9, insbesondere aber des Stegs 10, kann durch Gabionen 13 definiert werden, das sind korb- oder käfigartige Gebilde, meist aus Metallstäben oder Gittern, in der gewünschten Querschnittsform. Das natürliche Sohlsubstrat, das Bruchmaterial und/oder das Kantkorn werden durch die Gabionen 13 gegen Austrag und Umlagerung gesichert. Dabei können die Lamellen 7 an den Gabionen 13 befestigt sein. Liegen die Lamellen 7 direkt auf der Sohle des Gerinnekörpers 6 auf, können sie dort befestigt sein. Die Lamellen 7 können jedenfalls an Seitenwänden 12 des Gerinnekörpers 6 befestigt sein. In der Regel sind jedoch die Lamellen 7 herausziehbar in Schienen geführt, um die Wartung der Fischaufstiegshilfe zu vereinfachen.

Durch das Einbringen von Bruchmaterial und/ oder Kantkorn in den Gerinnekörper 6 wird den Wassertieren ein fortlaufender Kieslückenraum bereitgestellt, wodurch die Wahrscheinlichkeit einer erfolgreichen Wanderung erhöht und die Aufwanderung von Makrozoobenthos (kieslückenbewohnende Insektenlarven) und sohlgebundenen Fischen erschlossen werden kann. Für Wasserlebewesen mit starkem Sohlbezug wird die Barriere hierdurch erst generell überwindbar. Der Steg 10 ist vorzugsweise zumindest überwiegend mit Bruchmaterial gefüllt. Der Steg 10 kann beispielsweise einen rechteckigen oder trapezförmigen Querschnitt aufweisen. Die Höhe des Stegs 10 der Deckschicht 9 ist entlang der Längsachse 8 des Gerinnekörpers 6 im Wesentlichen konstant.

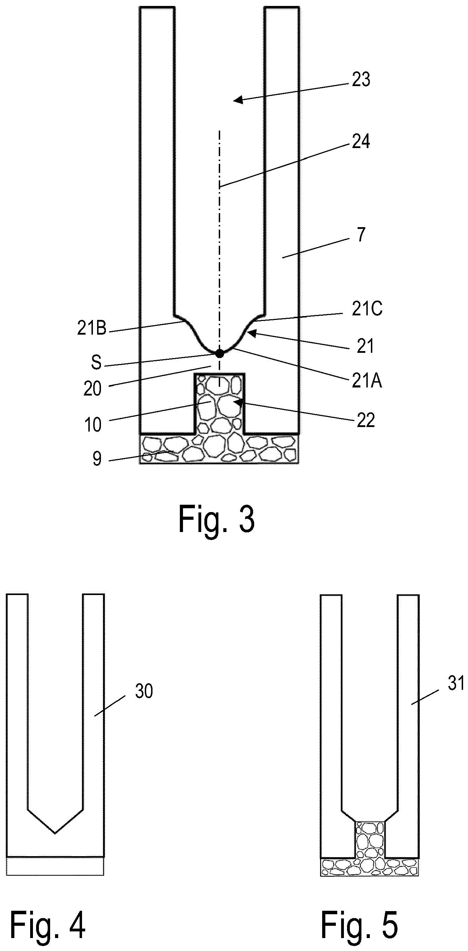

Fig. 3 zeigt in Vorderansicht eine Lamelle 7 gemäß der erfindungsgemäßen Vorrichtung 1 zur Wanderung von Wassertieren. Die Lamelle 7 ist plattenförmig und wird in der Vorrichtung 1 quer zur Längsachse 8 des Gerinnekörpers 6 angeordnet. Die Lamelle 7 weist einen nach unten offenen unteren Ausschnitt 22 auf, der oben durch ein Querelement 20 begrenzt wird. Die Querschnittsfläche des unteren Ausschnitts 22 ist so dimensioniert, dass der Steg 10 der Deckschicht 9 im unteren Ausschnitt 22 aufnehmbar ist. Die Oberkante des Querelements 20 weist eine, zur Gerinnemitte hin von beiden Seiten abfallende Kontur 21 auf, die eine untere Begrenzung eines sich vom Querelement 20 nach oben erstreckenden oberen Ausschnitts 23 der Lamelle definiert. Im vorliegenden Ausführungsbeispiel der Erfindung ist die Kontur 21 als geschwungene Kontur ausgebildet. Die Kontur 21 der Oberkante des Querelements 20 ist symmetrisch in Bezug auf eine Breitenhalbierende 24 der Lamelle ausgebildet. Im dargestellten Ausführungsbeispiel der Erfindung besteht die Kontur 21 der Oberkante des Querelements 20 entlang ihres gesamten Verlaufs aus geschwungenen Abschnitten. Dabei ist ein zentraler, d.h. in Bezug auf die Breitenhalbierende 24 mittiger Abschnitt 21A der geschwungenen Kontur 21 der Oberkante des Querelements 20 konvex ausgebildet ist. Genauer gesagt, ist in diesem Ausführungsbeispiel der Erfindung der konvexe zentrale Abschnitt 21A parabelförmig mit dem Parabel-Scheitelpunkt S als tiefstem Punkt ausgebildet, sodass sich der parabelförmige zentrale Abschnitt 21A symmetrisch zur Breitenhalbierenden 24 nach oben erstreckt. D.h. die Breitenhalbierende 24 stellt gleichzeitig die Parabelachse dar. An den konvexen zentralen Abschnitt 21A der geschwungenen Kontur 21 schließen sich beidseits konkave Seitenabschnitte 21B, 21C an. Diese beiden konkaven Seitenabschnitte 21B, 21C bilden die Endabschnitte der geschwungenen Kontur 21 der Oberkante des Querelements 20, d.h. die konkaven Seitenabschnitte 21B, 21C münden in die Seitenwände des oberen Ausschnitts 23. Der obere Ausschnitt 23 der Lamelle ist nach oben offen. Alternativ zur geschwungenen Kontur 21, wenn auch weniger bevorzugt, kann eine Kontur mit geraden Abschnitten vorgesehen werden, die in der einfachsten Ausführung durch einen V-Ausschnitt umgesetzt werden kann. Wie eingangs erwähnt, weist eine solche Ausführungsform aber gegenüber einer geschwungenen Kontur verschlechterte hydraulische Eigenschaften auf.

In der dargestellten Ausführungsform der Lamelle 7 ist das Querelement 20 als integrierter Bestandteil der Lamelle 7 ausgebildet. In einer alternativen Ausführungsform kann aber das Querelement 20 als eigenständiges, vorzugsweise austauschbares Bauteil ausgebildet sein.

Nachfolgend werden die vorteilhaften hydraulischen Eigenschaften der Lamelle 7 der erfindungsgemäßen Vorrichtung 1 zur Wanderung von Wassertieren den hydraulischen Eigenschaften von Lamellen des ursprünglichen Denil-Fischpasses und des modifizierten Denil-Fischpasses gemäß der AT 520908 gegenübergestellt. Zur Illustration ist in Fig. 4 in Vorderansicht eine Lamelle 30 dargestellt, die üblicherweise im ursprünglichen Denil-Fischpass verwendet wird. In Fig. 5 ist in Vorderansicht eine zweigeteilte Lamelle 31 des modifizierten Denil-Fischpasses gemäß der AT 520908 gezeigt.

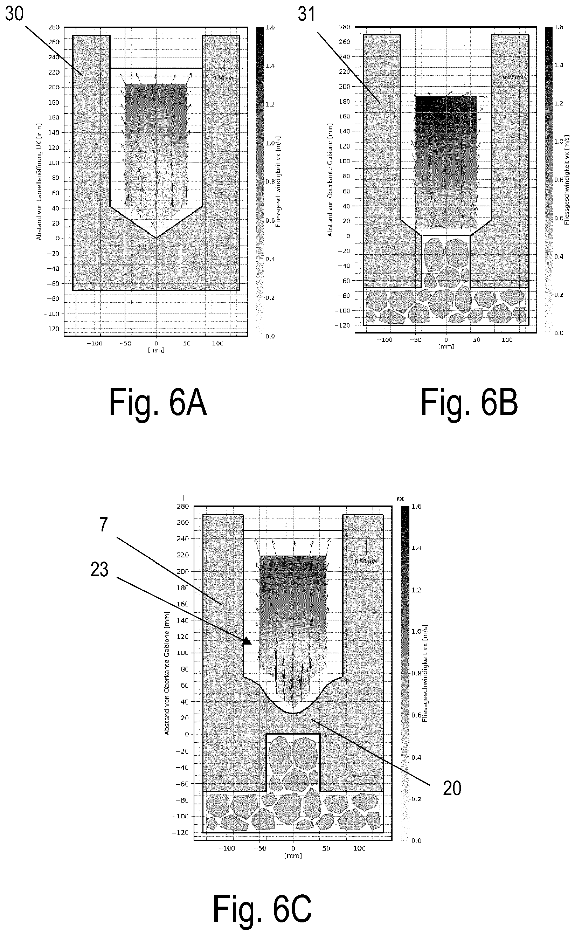

Die Figuren 6A, 6B und 6C zeigen Contourplots der Fließgeschwindigkeitsverteilung an den Lamellen 30 des originalen Denil-Fischpasses (Fig. 6A), an den Lamellen 31 des modifizierten Denil-Fischpasses gemäß AT 520908 (Fig. 6B), und an den Lamellen 7 der erfindungsgemäßen Vorrichtung 1 zur Wanderung von Wassertieren (Fig. 6C).

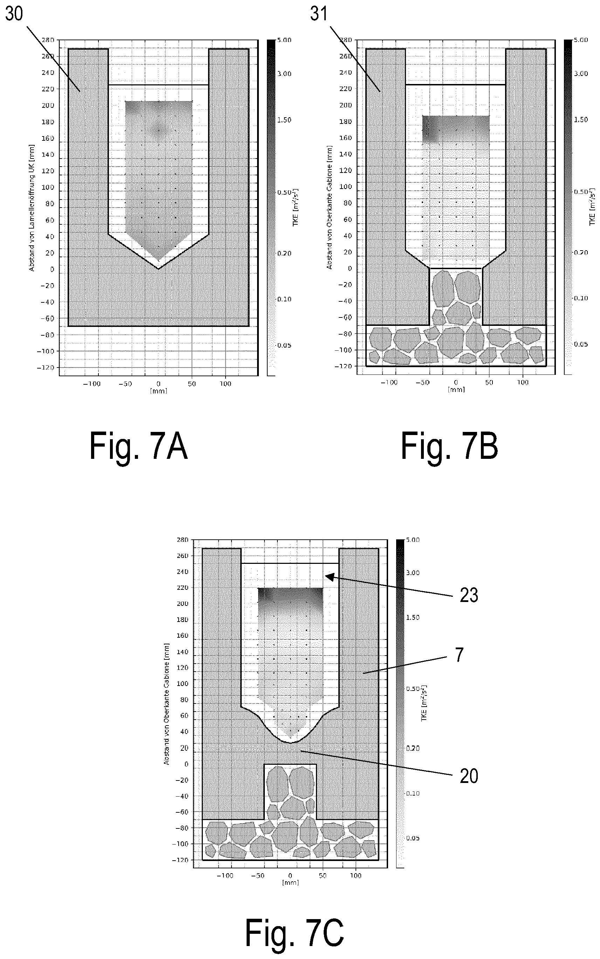

Die Figuren 7A, 7B und 7C zeigen Contourplots der turbulenten kinetischen Energie an den Lamellen 30 des originalen Denil-Fischpasses (Fig. 7A), an den Lamellen 31 des modifizierten Denil-Fischpasses gemäß AT 520908 (Fig. 7B), und an den Lamellen 7 der erfindungsgemäßen Vorrichtung 1 zur Wanderung von Wassertieren (Fig. 7C).

Aus den Contourplots der Figuren 6A, 6B, 6C erkennt man, dass die Fließgeschwindigkeiten im modifizierten Denil-Fischpass deutlich höher sind als im originalen Denil-Fischpass. Weiters ist ersichtlich, dass auch die Fließgeschwindigkeiten in der erfindungsgemäßen Vorrichtung 1 zur Wanderung von Wassertieren abschnittsweise höher sind als im originalen Denil-Fischpass, jedoch deutlich geringer sind als im modifizierten Denil-Fischpass. Betrachtet man die Verteilung der Fließgeschwindigkeit, so zeigt sich, dass bei der erfindungsgemäßen Vorrichtung 1 zur Wanderung von Wassertieren die Fließgeschwindigkeit in einem Bereich von der geschwungenen Kontur 21 des Querelements 20 aufwärts bis etwa zur Mitte der Höhe des oberen Ausschnitts 23 ähnlich niedrig ist wie beim originalen Denil-Fischpass und erst darüber höhere Werte aufweist. Dieser untere Bereich ist aber für den Aufstieg von Kleinwassertieren und sohlnahe lebenden Wassertieren relevant. Die Fließgeschwindigkeit beim modifizierten Denil-Fischpass ist generell höher als bei der erfindungsgemäßen Vorrichtung 1 zur Wanderung von Wassertieren und als beim originalen Denil-Fischpass.

Aus den Contourplots der Figuren 7A, 7B, 7C erkennt man, dass die turbulente kinetische Energie im originalen Denil-Fischpass deutlich höher ist als im modifizierten Denil-Fischpass und als in der erfindungsgemäßen Vorrichtung 1 zur Wanderung von Wassertieren.

Zusammenfassend kann man festhalten, dass die erfindungsgemäße Vorrichtung 1 zur Wanderung von Wassertieren gegenüber dem Stand der Technik eine deutliche Verringerung der Fließgeschwindigkeiten unter Beibehaltung der geringen turbulenten kinetischen Energie erfährt. Die Abbildung der turbulenten kinetischen Energie im originalen Denil-Fischpass in Fig. 7A veranschaulicht auch deutlich, dass beim originalen Denil-Fischpass ein Auftreten hoher Turbulenzen in Sohlnähe verzeichnet wird, welches die eingeschränkte Passierbarkeit für ein breites Artenspektrum begründet. Dieses Problem wird durch die vorliegende Erfindung vollständig gelöst. Gegenüber dem modifizierten Denil-Fischpass zeichnet sich die vorliegende Erfindung durch eine erhebliche Verringerung der Fließgeschwindigkeit aus, die es somit auch bei größeren Bautypen schwächeren und kleineren Wassertieren ermöglicht, die Vorrichtung 1 zur Wanderung von Wassertieren zu überwinden. Eine wesentliche Errungenschaft der vorliegenden Erfindung liegt in der hydraulischen Resilienz, sodass der Fischpass auch bei verringerter Wasserführung, wie dies etwa im Zuge von Reusenmonitorings (der Reusenkarten wird durch Schwimmstoffe wie etwa Laub kontinuierlich verlegt, wodurch der Durchfluss reduziert wird), welche eine standardisierte Methode zur biotischen Überprüfung von Fischaufstiegshilfen darstellen, zu erwarten ist.

## Patentansprüche

1. Vorrichtung (1) zur Wanderung von Wassertieren, wobei die Vorrichtung (1) zumindest einen Gerinnekörper (6) mit einem oberwasserseitigen Ende (3) und mit einem unterwasserseitigen Ende (2) aufweist, wobei der Gerinnekörper (6) eine zwischen dem oberwasserseitigen Ende (3) und dem unterwasserseitigen Ende (2) verlaufende Längsachse (8) aufweist, wobei die Sohle des Gerinnekörpers (6) zumindest abschnittsweise entlang der Längsachse (8) des Gerinnekörpers (6) mit einer Deckschicht (9) aus natürlichem Sohlsubstrat und/oder Bruchmaterial versehen ist und die Deckschicht (9) einen im Wesentlichen entlang der Längsachse (8) verlaufenden Steg (10) aufweist, wobei im Gerinnekörper (6) plattenförmige Lamellen (7) quer zur Längsachse (8) des Gerinnekörpers (6) angeordnet sind,
**dadurch gekennzeichnet, dass**
die Lamellen (7) einen nach unten offenen unteren Ausschnitt (22) aufweisen, der oben durch ein Querelement (20) begrenzt wird, wobei die Querschnittsfläche des unteren Ausschnitts (22) so dimensioniert ist, dass der Steg (10) der Deckschicht (9) im unteren Ausschnitt (22) aufnehmbar ist, wobei die Oberkante des Querelements (20) eine zur Mitte hin abfallende Kontur (21) aufweist, die eine untere Begrenzung eines sich vom Querelement (20) nach oben erstreckenden oberen Ausschnitts (23) der Lamellen (7) definiert.

2. Vorrichtung nach Anspruch 1, **dadurch gekennzeichnet, dass** die zur Mitte hin abfallende Kontur (21) der Oberkante des Querelements (20) symmetrisch in Bezug auf eine Breitenhalbierende (24) der Lamelle (7) ist.

3. Vorrichtung nach Anspruch 1 oder 2, **dadurch gekennzeichnet, dass** die Kontur (21) der Oberkante des Querelements (20) einen zumindest abschnittweise geschwungenen Verlauf aufweist.

4. Vorrichtung nach Anspruch 3, **dadurch gekennzeichnet, dass** die geschwungene Kontur (21) der Oberkante des Querelements (20) ausschließlich aus geschwungenen Abschnitten (21A, 21B, 21C) besteht.

5. Vorrichtung nach Anspruch 3 oder 4, **dadurch gekennzeichnet, dass** ein zentraler Abschnitt (21A) der geschwungenen Kontur (21) der Oberkante des Querelements (20) konvex ausgebildet ist.

6. Vorrichtung nach Anspruch 5, **dadurch gekennzeichnet, dass** der konvexe zentrale Abschnitt (21A) parabelförmig mit dem Parabel-Scheitelpunkt (S) als tiefstem Punkt ausgebildet ist.

7. Vorrichtung nach Anspruch 5 oder 6, **dadurch gekennzeichnet, dass** sich an den konvexen zentralen Abschnitt (21A) beidseits konkave Seitenabschnitte (21B, 21C) anschließen.

8. Vorrichtung nach Anspruch 7, **dadurch gekennzeichnet, dass** die konkaven Seitenabschnitte (21B, 21C) die Endabschnitte der geschwungenen Kontur (21) der Oberkante des Querelements (20) bilden.

9. Vorrichtung nach Anspruch 1 oder 2, **dadurch gekennzeichnet, dass** die Kontur der Oberkante des Querelements (20) einen zumindest abschnittweise geraden Verlauf aufweist.

10. Vorrichtung nach einem der vorhergehenden Ansprüche, **dadurch gekennzeichnet, dass** das Querelement (20) als eigenständiges, vorzugsweise austauschbares Bauteil ausgebildet ist.

11. Vorrichtung nach einem der vorhergehenden Ansprüche, **dadurch gekennzeichnet, dass** die Höhe des Stegs (10) der Deckschicht (9) entlang der Längsachse (8) des Gerinnekörpers (6) im Wesentlichen konstant ist.

## Claims

1. A device (1) for the migration of aquatic animals, wherein the device (1) has at least one channel body (6) with an upstream end (3) and with a downstream end (2), wherein the channel body (6) has a longitudinal axis (8) extending between the upstream end (3) and the downstream end (2), wherein the bottom of the channel body (6) is provided, at least in sections along the longitudinal axis (8) of the channel body (6), with a cover layer (9) made of natural bottom substrate and/or debris material, and the cover layer (9) has a ridge (10) running essentially along the longitudinal axis (8), wherein plate-shaped lamellae (7) are arranged in the channel body (6) transversely to the longitudinal axis (8) of the channel body (6),
**characterized in that**
the lamellae (7) have a downwardly open lower cut-out (22), which is limited at the top by a transverse element (20), wherein the cross-sectional area of the lower cut-out (22) is dimensioned in such a way that the ridge (10) of the cover layer (9) may be accommodated in the lower cut-out (22), wherein the upper edge of the transverse element (20) has a contour (21), which is inclined towards the centre and defines a lower boundary of an upper cut-out (23) of the lamellae (7) extending upwards from the transverse element (20).

2. A device according to claim 1, **characterized in that** the contour (21) of the upper edge of the transverse element (20), which is inclined towards the centre, is symmetrical with respect to a bisector (24) of the width of the lamella (7).

3. A device according to claim 1 or 2, **characterized in that** the contour (21) of the upper edge of the transverse element (20) has a curved course at least in some sections.

4. A device according to claim 3, **characterized in that** the curved contour (21) of the upper edge of the transverse element (20) consists exclusively of curved sections (21A, 21B, 21C).

5. A device according to claim 3 or 4, **characterized in that** a central section (21A) of the curved contour (21) of the upper edge of the cross member (20) is configured to be convex.

6. A device according to claim 5, **characterized in that** the convex central section (21A) is configured to be parabolic with the parabolic vertex (S) as the lowest point.

7. A device according to claim 5 or 6, **characterized in that** the convex central section (21A) is adjoined on both sides by concave side sections (21B, 21C).

8. A device according to claim 7, **characterized in that** the concave side sections (21B, 21C) form the end sections of the curved contour (21) of the upper edge of the transverse element (20).

9. A device according to claim 1 or 2, **characterized in that** the contour of the upper edge of the transverse element (20) has a straight course at least in some sections.

10. A device according to any of the preceding claims, **characterized in that** the transverse element (20) is configured as an independent, preferably replaceable component.

11. A device according to any of the preceding claims, **characterized in that** the height of the ridge (10) of the cover layer (9) is substantially constant along the longitudinal axis (8) of the channel body (6).

## Revendications

1. Dispositif (1) pour la migration d'animaux aquatiques, lequel dispositif (1) comporte au moins un corps de chenal (6) avec une extrémité émergée (3) et une extrémité immergée (2), ce corps de chenal (6) présentant un axe longitudinal (8) courant entre l'extrémité émergée (3) et l'extrémité immergée (2), le fond du corps de chenal (6) étant doté au moins partiellement le long de l'axe longitudinal (8) du corps de chenal (6) d'une couche supérieure (9) faite de substrat de fond naturel et/ou de matériau concassé et cette couche supérieure (9) comportant une barre (10) courant sensiblement le long de l'axe longitudinal (8), des lamelles (7) en forme de plaques étant disposées dans le corps de chenal (6), perpendiculairement à l'axe longitudinal (8) du corps de chenal (6),
**caractérisé en ce que**
les lamelles (7) présentent une découpe inférieure (22) ouverte vers le bas qui est délimitée en haut par un élément transversal (20), la surface transversale de la découpe inférieure (22) étant dimensionnée de telle sorte que la barre (10) de la couche supérieure (9) peut se loger dans la découpe inférieure (22), le bord supérieur de l'élément transversal (20) présentant un contour (21) descendant jusqu'au milieu qui définit une limite inférieure d'une découpe supérieure (23) des lamelles (7) s'étendant vers le haut depuis l'élément transversal (20).

2. Dispositif selon la revendication 1, **caractérisé en ce que** le contour (21) descendant jusqu'au milieu du bord supérieur de l'élément transversal (20) est symétrique par rapport à une bissectrice en largeur (24) de la lamelle (7).

3. Dispositif selon la revendication 1 ou 2, **caractérisé en ce que** le contour (21) du bord supérieur de l'élément transversal (20) présente un tracé au moins partiellement incurvé.

4. Dispositif selon la revendication 3, **caractérisé en ce que** le contour incurvé (21) du bord supérieur de l'élément transversal (20) est constitué uniquement de segments incurvés (21A, 21B, 21C).

5. Dispositif selon la revendication 3 ou 4, **caractérisé en ce qu'**un segment central (21A) du contour incurvé (21) du bord supérieur de l'élément transversal (20) est de forme convexe.

6. Dispositif selon la revendication 5, **caractérisé en ce que** le segment central convexe (21A) est en forme de parabole, avec le point culminant de la parabole (S) comme point le plus bas.

7. Dispositif selon la revendication 5 ou 6, **caractérisé en ce que** des segments latéraux concaves (21B, 21C) se raccordent de part et d'autre au segment central convexe (21A).

8. Dispositif selon la revendication 7, **caractérisé en ce que** les segments latéraux concaves (21B, 21C) constituent les segments terminaux du contour incurvé (21) du bord supérieur de l'élément transversal (20).

9. Dispositif selon la revendication 1 ou 2, **caractérisé en ce que** le contour du bord supérieur de l'élément transversal (20) présente un tracé au moins partiellement rectiligne.

10. Dispositif selon une des revendications précédentes, **caractérisé en ce que** l'élément transversal (20) est constitué comme un élément de construction indépendant, de préférence remplaçable.

11. Dispositif selon une des revendications précédentes, **caractérisé en ce que** la hauteur de la barre (10) de la couche supérieure (9) le long de l'axe longitudinal (8) du corps de chenal (6) est sensiblement constante.
